# EUROPEAN PATENT APPLICATION

(11) **EP 2 202 549 A1**
(43) Date of publication of application: **30.06.2010**
(21) Application number: 08828337.9
(22) Date of filing: 26.08.2008
(51) Int. Cl.: G02B 6/122, G02B 6/12

(54) **POLYMERIC OPTICAL WAVEGUIDE FILM**

(30) Priority: 30.08.2007 JP 2007224586
(71) Applicant: Mitsui Chemicals, Inc., Tokyo 105-7117 (JP)
(72) Inventor: SHIODA, Tsuyoshi, Chiba 299-0265 (CN)
(74) Representative: Wiedemann, Peter
(86) International application number: PCT/JP2008/002310
(87) International publication number: WO 2009/028172

(57) **Abstract**

This invention, provides a polymeric optical waveguide film possessing excellent sliding and bending resistance and machinability. This polymeric optical waveguide film is a bendable polymeric optical waveguide film comprising a first clad layer, a second clad layer, and a core held between the first and second clad layers. This polymeric optical waveguide film has grooves provided by a cutting process. A polymeric material constituting a layer, which is located on the outside of the core when the polymeric optical waveguide film is bent and a part or the whole of which has been cut in the thickness-wise direction by the cutting operation, has a tensile modulus of not less than 0.1 GPa and less than 1 GPa as measured at room temperature using a test piece having a thickness of 0.06mm.

## Description

### Technical Field

The present invention relates to a polymeric optical waveguide film.

### Background Art

Recently, slide cellular phones have become a focus of attention for their excellent features including design and are replacing conventional foldable cellular phones. A slide cellular phone refers to a cellular phone that includes a key pad unit (also referred to as a "main board unit") and a separate display unit on the key pad unit, so that the user can slide away the display unit to operate the key pad unit. To establish electrical connection between the key pad unit and display unit, the slide cellular phone employs an electrical circuit film (also referred to as a "flexible electrical circuit board"), which is bonded at one end to a portion of the key pad side electrical circuit board and at the other end to a portion of the display side electrical circuit board. Accordingly, the electrical circuit film is bent in U shape at a predetermined curvature radius. Along with opening and closing of the display unit, one segment of the U-shaped electrical circuit film is caused to slide back and forth repeatedly (see e.g., Patent Document 1). It is therefore required for the electrical circuit film to resist rupture during the above repetitive sliding movements (hereinafter referred to as "sliding flexure"), i.e., to have excellent sliding resistance.

Further, as slide cellular phones are becoming thinner recently, the U-shaped gap of the bent flexible electrical circuit board, which can be approximated by the diameter of curvature, is becoming smaller. Conventional electrical circuit films used for cellular phones have been only required to endure a sliding test (JIS C 5016 8.6) under 3-4mm U-shaped gap condition, but are increasingly required to endure a sliding test under 2mm U-shaped gap condition. Sliding conditions become more stringent with reducing gap size; many of the conventional electrical circuit films fail to satisfy the sliding resistance requirement under 2mm U-shaped gap condition.

Regarding signal transmission between the key pad unit and display unit, it has been suggested to replace conventional electrical transmission with optical transmission, i.e., to employ a polymeric optical waveguide film (also referred to as a "flexible optical waveguide film") for optical connection instead of an electrical circuit film. As optical transmission can increase signal transmission density, it is possible to reduce the size of space required for signal transmission.

In this case polymeric optical waveguide films are required to have sliding resistance as with electrical circuit films. As a method for improving the sliding resistance of a polymeric optical waveguide film, non-Patent Document 1 suggests providing grooves along core lines. However, even with the optical waveguide disclosed by non-Patent Document 1, it has been difficult to obtain sliding resistance high enough to endure the above stringent conditions.
Patent Document 1: Japanese Patent Application Laid-Open No.2006-128808
Non-Patent Document 1: T. Shioda and K. Yamada: "Bending Stable Polyimide Waveguide Film", preprint of the 2005 IEICE Electronics Society Conference, C-3-54

### Disclosure of Invention

### Problems to be Solved by the Invention

When a polymeric optical waveguide film is subjected to sliding flexure, it receives compaction stress at the inner side and tensile stress at the outside. The most inner side and most outer side at the bend point of the polymeric optical waveguide film become maximum stress points. The polymeric optical waveguide film is generally made of resin, a material which is more vulnerable to tensile stress than to compaction stress. For this reason, rupture of the polymeric optical waveguide film upon sliding flexure is believed to be primarily due to rupture at the outer side to which tensile stress is applied. In view of this, the inventors focused on the point that resin with excellent tensile characteristics can be used for the outer side of the bent polymeric optical waveguide film in order to prevent film rupture. More specifically, the inventors have conceived the idea of reducing the stress acting on the stretched part by employing resin with a low tensile modulus.

Unfortunately, however, it has been established that a polymeric optical waveguide film made of resin with a low tensile modulus raises the following problems when subjected to cutting work such as dicing: poor cutting precision; rough cut surface; and generation of considerable amounts of cutting dusts and burrs on the cut surface (collectively referred to as "poor workability"). Cutting dusts and burrs on the cut surface result in light propagation loss and poor processing precision. Further, since burrs may serve as the start points of rupture of optical waveguides, there is a possibility that sliding resistance decreases.
In view of the above, it is therefore an object of the present invention to provide a polymeric optical waveguide film with excellent sliding flexure durability and workability.

### Means for Solving the Problem

The inventors conducted studies and established that a polymeric optical waveguide film made of resin, the resin having a tensile modulus falling within a specific range as measured when cut in a piece having a given thickness, offers an excellent balance of sliding resistance and workability. Namely, the foregoing object can be achieved by the inventions described below.

[1] A bendable polymeric optical waveguide film including:
   a first clad layer;
   a second clad layer; and
   a core held between the first and second clad layers,
      wherein the polymeric optical waveguide film includes a groove formed through cutting work, and
      wherein a 0.06mm-thick test piece of a polymer material of a layer has a tensile modulus of 0.1 to less than 1.0 GPa at room temperature, the layer coming on the outside of the core when the polymeric optical waveguide film is bent and full thickness or partial thickness of portions of the layer being removed through the cutting work.
[2] A bendable polymeric optical waveguide film including:
   a first clad layer;
   a second clad layer;
   a core held between the first and second clad layers; and
   a base layer which is provided under the first clad layer and which is made of a different polymer material from the first clad layer or second clad layer,
      wherein the polymeric optical waveguide film includes a groove formed through cutting work, and
      wherein a 0.06mm-thick test piece of a polymer material of a layer which comes on the outside of the core when the polymeric optical waveguide film is bent and in which full thickness or partial thickness of portions is removed through the cutting work has a tensile modulus of 0.1 to less than 1.0 GPa at room temperature.
[3] The polymeric optical waveguide film according to [1] or [2], wherein the elongation of the 0.06mm-thick test piece from the yield point to rupture point as measured in a room temperature tensile test is 10% or more.
[4] The polymeric optical waveguide film according to [2], wherein the layer which comes on the outside of the core when the polymeric optical waveguide film is bent and in which full thickness or partial thickness of portions is removed through the cutting work is the base layer.
[5] The polymeric optical waveguide film according to [1] or [2], wherein the layer which comes on the outside of the core when the polymeric optical waveguide film is bent and in which full thickness or partial thickness of portions is removed through the cutting work contains a siloxane skeleton-containing polyimide resin.
[6] The polymeric optical waveguide film according to [1] or [2], wherein the layer which comes on the outside of the core when the polymeric optical waveguide film is bent and in which full thickness or partial thickness of portions is removed through the cutting work contains a polyimide resin having a repeating unit represented by the following general formula (1). 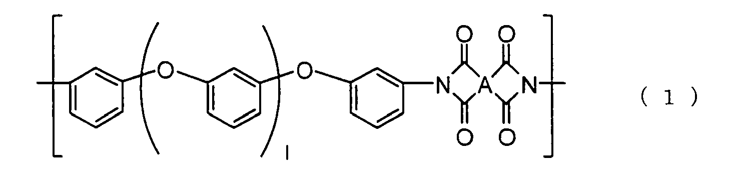 (where 1 denotes an integer of 1-7; and A denotes a tetravalent organic group)
[7] The polymeric optical waveguide film according to [6], wherein in general formula (1) 1 denotes an integer is 3-5.
[8]. The polymeric optical waveguide film according to [1] or [2], wherein a cut surface of the layer which comes on the outside of the core when the polymeric optical waveguide film is bent and in which full thickness or partial thickness of portions is removed through the cutting work has a surface roughness Ra of 0.4µm or less.
[9]. An electrical device including a polymeric optical waveguide film according to [1] or [2] in a bent state.

### Advantageous Effects of Invention

The present invention provides a polymeric optical waveguide film with excellent sliding resistance and workability

### Brief Description of Drawings

FIGS. 1A and 1B show an embodiment and manufacturing method of a 3-layer groove-type polyemeric optical waveguide film;
FIG. 2 is a cross-sectional view of another embodiment of a 3-layer groove-type polyemeric optical waveguide film;
FIG. 3 is a cross-sectional view of an embodiment of a 3-layer lithography-type polymeric optical waveguide film;
FIG. 4 is a cross-sectional view of another embodiment of a 3-layer lithography-type polymeric optical waveguide film;
FIG. 5 is a cross-sectional view of still another embodiment of a 3-layer lithography-type polymeric optical waveguide film;
FIG. 6 is a cross-sectional view of an embodiment of a 4-layer groove-type polyemeric optical waveguide film;
FIG. 7 is a cross-sectional view of an embodiment of a 4-layer lithography-type polymeric optical waveguide film;
FIG. 8 is a cross-sectional view of another embodiment of a 4-layer lithography-type polymeric optical waveguide film;
FIGS. 9A and 9B are partial perspective views of examples of a bent polymeric optical waveguide film of FIGS. 1A and 1B; and
FIGS. 10A and 10B are partial perspective views of examples of a bent polymeric optical waveguide film of in FIG6.

### Best Mode for Carrying Out the Invention

### 1. Polymeric optical waveguide film

"Optical waveguide" refers to a device which includes a core and a clad provided around the core and through which light trapped in the core propagates. "Core" refers to a portion of optical waveguide with a high refraction index where light mainly propagates. "Clad" refers to a portion of optical waveguide having a lower refraction index than the core.
Herein, the term "polymeric optical waveguide film" may be simply referred to as a "film" in some cases. As will be described later, a polymeric optical waveguide film according to the present invention is composed of flexible polymer material and thus can be bent for use.

It is only necessary to employ transparent resin as the core material for a polymeric optical waveguide film according to the present invention; transparent resins with flexibility are more preferable. Examples of flexible transparent resins include polyimide resins (including fluorinated polyimide resins), polyamideimide resins, silicone-modified epoxy resins, silicone-modified acrylic resins, and silicone-modified polynorbornenes.
Core materials need to have higher refraction indices than clad materials which will be described later. In the case where a polyimide resin is employed as a core material, for example, adjustment of refraction index may be accomplished by appropriate selection of a diamine compound, which constitutes the diamine unit of the polyimide resin.

Clad materials used for the clad of a polymeric optical waveguide film according to the present invention are only necessary to be selected from resins with lower refraction indices than core materials. Specific examples are resins similar to the above resins for core materials.

The polymeric optical waveguide film may optionally include an additional layer such as a base layer. The base layer is, for example, laminated on the clad to protect and support the polymeric optical waveguide film as well as to improve handleability of optical waveguides. The base layer requires no optical characteristics as it hardly contributes to optical waveguide performance. Thus, base materials for the base layer can be selected from any materials other than clad materials.
Preferred examples of base materials include known silicone-modified resins such as silicone-modified acrylic resins, silicone-modified epoxy resins, silicone-modified polyamideimide resins, and silicone-modified polyimide resins which can also be used as clad materials. It should be noted, however, that the base material and clad material need to be different materials.

A first polymeric optical waveguide film according to the present invention is a bendable polymeric optical waveguide film which includes a first clad layer, a second clad layer, and a core held between the first and second clad layers, wherein the polymeric optical waveguide film includes a groove formed through cutting work and wherein a 0.06mm-thick test piece of a polymer material of a layer which comes on the outside of the core when the polymeric optical waveguide film is bent and in which full thickness or partial thickness of portions is removed through the cutting work, has a tensile modulus of 0.1 to less than 1.0 GPa at room temperature.
A second polymeric optical waveguide film according to the present invention is a bendable polymeric optical waveguide film which includes a first clad layer, a second clad layer, a core held between the first and second clad layers, and a base layer which is provided under the first clad layer and which is made of a different polymer material than the first clad layer or second clad layer, wherein the polymeric optical waveguide film includes a groove formed through cutting work and wherein a 0.06mm-thick test piece of a polymer material of a layer which comes on the outside of the core when the polymeric optical waveguide film is bent and in which full thickness or partial thickness of portions is removed through the cutting work has a tensile modulus of 0.1 to less than 1.0 GPa at room temperature.

While the first polymeric optical waveguide film includes no base layer, the second polymeric optical waveguide film includes a base layer. Suppose the "core" is a "layer," it can be said that the first polymeric optical waveguide film has three layers and the second polymeric optical waveguide film has four layers. In view of this, the first polymeric optical waveguide film may be also referred to as a "3-layer polymeric optical waveguide film" and the second polymeric optical waveguide film may be referred to as a "4-layer polymeric optical waveguide film."
Hereinafter, the present invention will be described mainly with reference to a 3-layer polymeric optical waveguide film and a 4-layer polymeric optical waveguide film. However, it should be noted that the present invention can also be applied to other multi-layer polymeric optical waveguide films with additional functional layers.

### (1) 3-layer polymeric optical waveguide film

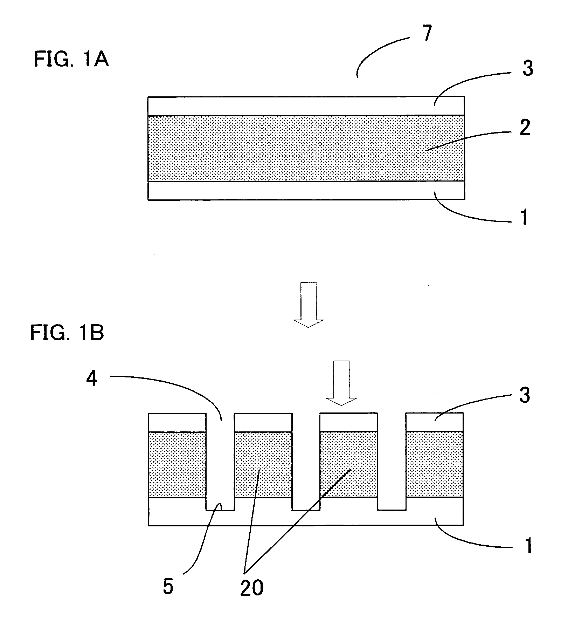

A 3-layer polymeric optical waveguide film can be classified into the following two types according to the arrangement of cores.
1) 3-layer polymeric optical waveguide film having cores defined by a groove
As shown in FIG. 1B, in a 3-layer polymeric optical waveguide film according to the present invention, the core layer held between the first and second clad layers is grooved through cutting work to define cores. The polymeric optical waveguide film of this type is referred to as a "3-layer groove-type polyemeric optical waveguide film."
The clad layer is a layer laminated on the core layer in order to clad the core layer. The core layer is a layer held between two clad layers and is to be grooved to define cores through cutting work.

The core width in the 3-layer groove-type polyemeric optical waveguide film is not specificaly limited; it may be around 40-200µm. The core thickness is not also specifically limited; however, it is preferably 30-100µm in order to faciliate alignment with other optical devices.

FIGS. 1A and 1B show an embodiment and manufacturing method of a 3-layer groove-type polyemeric optical waveguide film. More specifically, FIG. 1A is a cross-sectional view of a laminate prior to formation of a groove, wherein reference numeral 1 denotes a first clad layer; 2 denotes a core layer; and 3 denotes a second clad layer. FIG. 1B is a cross-sectional view of a polymeric optical waveguide film manufactured by providing a groove in the laminate of FIG. 1A, wherein reference numeral 20 denotes a core defined by grooving core layer 2; 4 denotes a groove; 5 denotes a groove bottom which is present inside the first clad layer; and 7 denotes a laminate.
The manufacturing method of a 3-layer groove-type polyemeric optical waveguide film will detailed later.

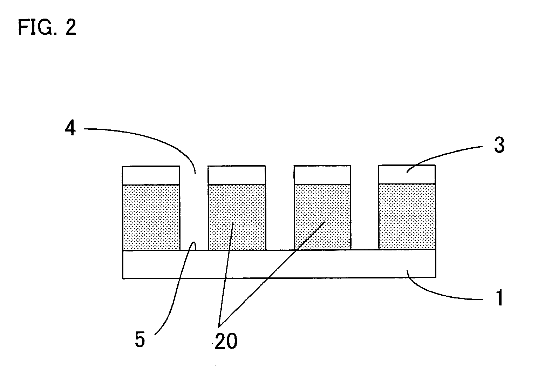

FIG. 2 is a cross-sectional view of another embodiment of a 3-layer groove-type polyemeric optical waveguide film. In this polyemeric optical waveguide film, groove bottom 5 exists at the same leve as the interface between core 20 and first clad layer 1. Referene numerals in FIG. 2 are the same as those in FIGS. 1A and 1B.

The thicknesses of first clad layer 1 and second clad layer 3 are preferably small in order to enhance flexibility of the polymeric optical waveguide film. Thus, preferably, first and sccond clad layers 1 and 3 are made thin without causing leaking of light trapped in core 20. For example, when the relative index difference between core 20 and first clad layer 1 or second clad layer 3, [(n_{core}-n_{clad}/n_{ceore}) x 100: (850nm, RT), where n_{core} is a refraction index of core 20 and n_{clad} is a refraction index of first clad layer or second clad layer 2], is 1% or more, the thickness of first clad layer 1 or second clad layer 3 may be around 5µm or more.
Accordingly, the thickness of laminate 7 is preferably 40-200µm, more preferably 50-150µm, and further preferably 70-110µm.

The clad material for the first clad layer and the clad material for the second clad layer may be different and any combination can be employed. However, from the viewpoint of simplifying the manufacturing process of a polymeric optical waveguide film, preferably, the first and second clad layers are made of the same clad material.

In the 3-layer groove-type polyemeric optical waveguide film, core 20 is defined by groove 4 in core layer 2. Groove 4 and core 20 run in the same direction. The term "same direction" as used herein means that where core 20 runs linearly, grooves 4 run in parallel to core 20, and that where core 20 is curved, grooves 4 are curved along core 20.
Groove 4 is formed through cutting work. As used herein "cutting work" refers to a process in which a workpiece is cut, carved, etc. Examples of cutting work include a cutting process using a dicing saw. As will be described later, a polymeric optical waveguide film according to the present invention has the advantage of reducing light loss during light propagation because problems such as rough cut surface, attachment of burrs or cutting dusts, etc., are less likely to occur in grooves 4.

Groove 4 is formed such that its cut surface is substantially perpendicular to the surfaces of first clad layer 1 and second clad layer 3 which are surrounding core 20. In this way, first clad layer 1 and core layer 2 are cut, and core 20 is formed. Groove bottom 5 is either positioned at the same level as the interface between core 20 and first clad layer 1 or inside first clad layer 1. When the film thickness at groove bottom 5, i.e., the thickness of the film remaining under groove is small, the polymeric optical waveguide film shows high flexibility. However, when the film thickness at the groove is too small, it may result in film strength reduction, etc. For this reason, the film thickness at the groove is preferably 10-100µm, more preferably 20-75µm.

The width of groove 4 in a 3-layer groove-type polyemeric optical waveguide film is not specifically limited and can be appropriately determined according to rigidity required upon handling of the polyemeric optical waveguide film. In general, groove width is preferably smaller than groove depth.

The length of groove 4 is not specifically limited; groove 4 may be provided all over the length of the polyemeric optical waveguide film. Moreover, groove 4 may be linear or curved as described above.

The number of groove 4 to be provided may be 1 or more. When one groove 4 is provided, cores 20 are formed in regions defined by groove 4 and side surfaces of opitcal waveguides. When two or more grooves 4 are provided, cores 20 are respectively formed in regions defined by grooves 4.

The inside of groove 4 needs to have a smaller refraction index than core 20. Thus, groove 4 may be a void or filled with material having a smaller refraction index than core 20. To increase film flexibility, however, groove 4 is preferably a void. Moreover, the cut surface of groove 4 may be covered with a layer made of the same material as first clad layer 1 or second clad layer 3. It is only necessary for this layer to have a thickness of about 1µm. This layer covering the cut surface can prevent negative influences to optical waveguide characteristics due to possible contamination or application of additional resin by the end user.

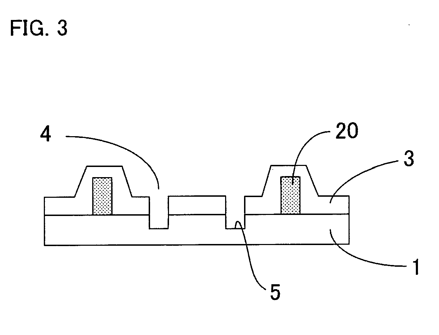

2) 3-layer polymeric optical waveguide film having cores formed by lithography.
As shown in FIG. 3, a 3-layer polymeric optical waveguide film according to the present invention may have lithography-patterned cores between the first and second clad layers. The polymeric optical waveguide film of this type is referred to as a "3-layer lithography-type polymeric optical waveguide film."

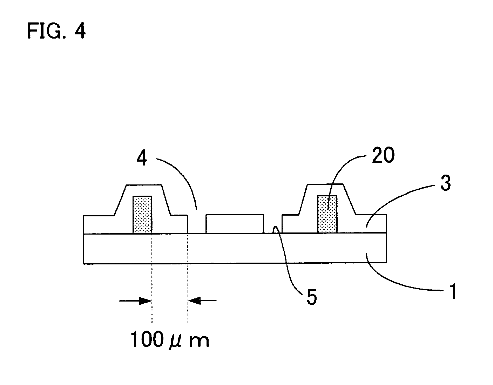

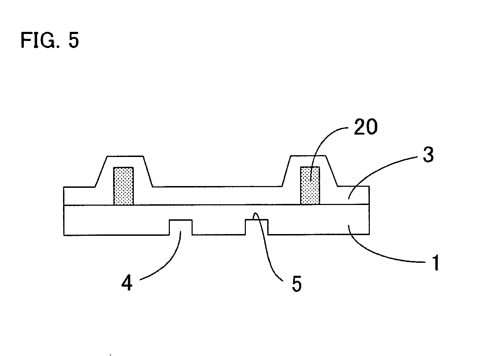

FIG. 3 is a cross-sectional view showing an embodiment of a 3-layer lithography-type polymeric optical waveguide film. In the drawing reference numeral 1 denotes a first clad layer; 20 denotes a core; 3 denotes a second clad layer; 4 denotes a groove; and 5 denotes a groove bottom. FIG. 4 is a cross-sectional view showing another embodiment of a 3-layer lithography-type polymeric optical waveguide film. FIG. 5 is a cross-sectional view showing still another embodiment of a 3-layer lithography-type polymeric optical waveguide film.

Core width is not specifically limited; it is only necessary for core 20 of a 3-layer lithography-type polymeric optical waveguide film to have a width of about 40-100µm. However, from the view of facilitating alignment with other optical devices, core thickness is preferably 30-100µm. Moreover, it is only necessary for both first clad layer 1 and second clad layer 3 to have a thickness of about 5µm or more.
Thus, the overall thickness (maximum thickness) of a 3-layer lithography-type polymeric optical waveguide film is preferably 40-200um, more preferably 50-15µm, further preferably 70-110µm. The method of forming cores by lithography will be detailed later.

A 3-layer lithography-type polymeric optical waveguide film includes a groove formed by cutting work. This groove is not intended for core formation in contrast to a 3-layer groove-type polymeric optical waveguide film; it is provided for the purpose of improving film flexibility and sliding resistance. Preferably, groove shape and groove size are the same as those described above.

Groove 4 in the polymeric optical waveguide film shown in FIG. 3 cuts through second clad layer, so that its groove bottom 5 exists inside first clad layer 1. Groove 4 in the polymeric optical waveguide film shown in FIG. 4 cuts through second clad layer 3, and its groove bottom 5 exists at the interface between first clad layer 1 and second clad layer 3. Groove 4 in the polymeric optical waveguide film shown in FIG. 5 is formed from the first clad layer 1 side, and its groove bottom 5 exists inside first clad layer 1. Although not shown, groove 4 in the polymeric optical waveguide film shown in FIG. 4 may cut through first clad layer 1 so that its groove bottom exists inside second clad layer 3, not at the interface between first clad layer 1 and second clad layer 3.

### (2) 4-layer polymeric optical waveguide film

A 4-layer polymeric optical waveguide film can be classified into the following two types according to the arrangement of cores as with the 3-layer polymeric optical waveguide film.

### 1) 4-layer polymeric optical waveguide film having cores defined by grooves

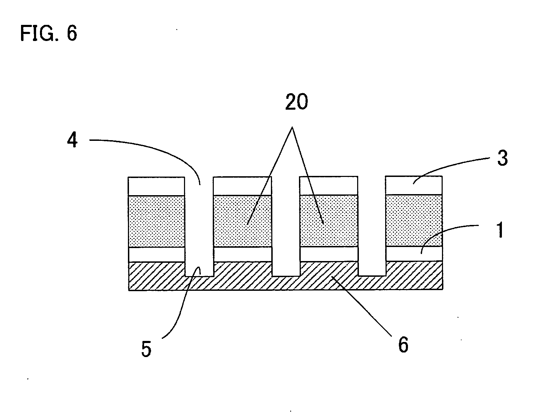

As shown in FIG. 6, a 4-layer polymeric optical waveguide film according to the present invention includes cores defined by grooves formed by cutting a core layer which is held between first and second clad layers through cutting work, and a base layer on the opposite side of first clad layer 1 from the cores. The polymeric optical waveguide film of this type is referred to as a "4-layer groove-type polyemeric optical waveguide film."

FIG. 6 shows an embodiment of a 4-layer groove-type polyemeric optical waveguide film. In the drawing reference numeral 6 denotes a base layer which is provided under first clad layer 1. The other refernce numerals in this drawing are the same as those of FIG. 1. Base layer 6 is provide to protect and support the polymeric optical waveguide film as well as to improve handleability of optical waveguides. Also, base layer 6 serves to ensure reflection generated by the difference in refraction index between core 20 and first clad layer 1 or second clad layer 3 and to improve film flexibility, without causing any optical characteristics changes.

The widths and thicknesses of core 20, first clad layer 1, and second clad layer 3 of a 4-layer groove-type polymeric optical waveguide film may be respectively similar to those of core 20, first clad layer 1, and second clad layer 3 of a 3-layer groove-type polymeric optical waveguide film. The thickness of base layer 6 in a 4-layer groove-type polymeric optical waveguide film is preferably 5-25µm; therefore, the total thickness of a 4-layer groove-type polymeric optical waveguide film is preferably 50-150µm.

In a 4-layer groove-type polymeric optical waveguide film, cores 20 are formed by defining the core layer by grooves 4. Preferably, groove 4 is formed in the same manner as that of the above 3-layer groove-type polymeric optical waveguide film. However, groove bottom 5 exists inside base layer 6, not at the interface between first clad layer 1 and base layer 6. The thickness of film remaining under the groove bottom is preferably 10-100µm, more preferably 20-75µm.

### 2) 4-layer polymeric optical waveguide film having cores formed by lithography.

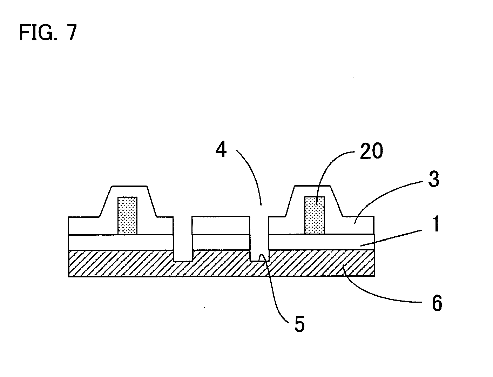

As shown in FIG. 7, a 4-layer polymeric optical waveguide film according to the present invention includes cores formed by lithography between first and second clad layers, and a base layer at the opposite side of first clad layer from the cores. The polymeric optical waveguide film of this type is referred to as a "4-layer lithography-type polymeric optical waveguide film."

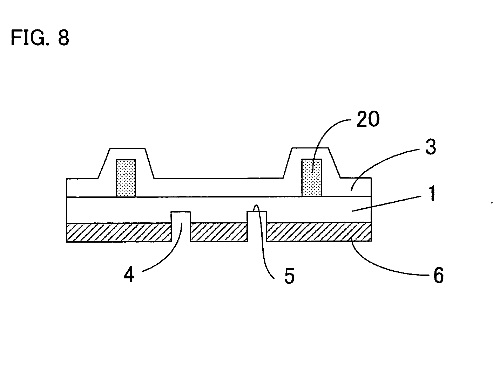

FIG. 7 is a cross-sectional view showing an embodiment of a 4-layer lithography-type polyemeric optical waveguide film. In the drawing reference numeral 6 denotes a base layer which is provided on the opposite side of first clad layer 1 from the cores. FIG. 8 is a cross-sectional view showing another embodiment of a 4-layer lithography-type polyemeric optical waveguide film. The other refernce numerals in FIGS. 7 and 8 are the same as those of FIG. 3.

A 4-layer lithography-type polyemeric optical waveguide film has a groove formed through cutting work. This groove is provided to improve sliding resistance as in the above 3-layer lithography-type polyemeric optical waveguide film. Preferably, groove 4 is formed in the same manner as that of the 3-layer lithography-type polymeric optical waveguide film.

Groove 4 of the polyemeric optical waveguide film shown in FIG. 7 is formed by cutting both second clad layer 3 and first clad layer 1, so that its groove bottom 5 exists inside base layer 6, not at the interface between first clad layer 1 and base layer 6. On the other hand, groove 4 of the polyemeric optical waveguide film shown in FIG. 8 is formed from the base layer 6 side, and its groove bottom 5 exists inside first clad layer 1, not at the interface between first clad layer 1 and base layer 6. Although not shown, groove bottom 5 of groove 4 in the polymeric optical waveguide film shown in FIG. 8 may exist inside base layer 6.

### (3) Specific outer layer

"Specific outer layer" as used herein refers to a layer which, when the polymeric optical waveguide film is bent, comes on the outside of cores and in which full thickness or partial thickness of portions is removed through cutting work.
As used herein, "bend" typically means that a polymeric optical waveguide film is bent lengthwise such that opposite edges meet, but also encompasses other embodiments, e.g., where the film is bent in S shape. When the film is bent in S shape, a specific outer layer may be specified for each bending point. Thus, when a polymeric optical waveguide film is bent in S shape, the layers on both sides of the cores may serve as a specific outer layer.

In the case of the above "3-layer groove-type" or "3-layer lithography-type" polymeric optical waveguide film, a specific outer layer corresponds to either first clad layer 1 or second clad layer 3, which is grooved through cutting work or partially cut for groove formation and which comes on the outside of core 20 when the polymeric optical waveguide film is bent.

More specifically, referring to FIG. 1B, second clad layer 3 becomes a specific outer layer when the polymeric optical waveguide film is bent with the upper side in the drawing being convexed, and first clad layer 1 becomes a specific outer layer when the polymeric optical waveguide film is bent with the lower side being convexed.

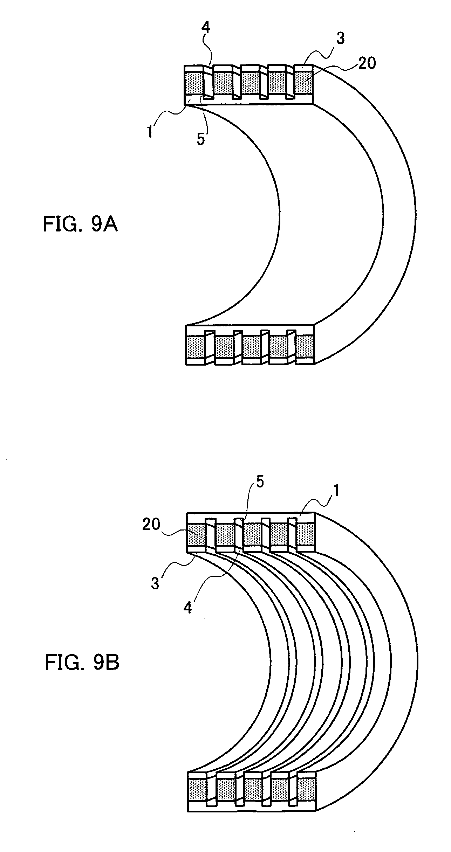

FIGS. 9A and 9B are perspective views each showing an example of a state where the polymeric optical waveguide film of FIG. 1 is bent. FIG. 9A shows a state where second clad layer 3 becomes a specific outer layer, and FIG. 9B shows a state where first clad layer 1 becomes a specific outer layer.
The specific outer layer in FIG. 2 is second clad layer 3 when the polymeric optical waveguide film is bent with the upper side in the drawing being convexed.
The specific outer layer in FIG. 3 is either second clad layer 3 when the polymeric optical waveguide film is bent with the upper side in the drawing being convexed, or first clad layer 1 when the polymeric optical waveguide film is bent with the lower side in the drawing being convexed.
The specific outer layer in FIG. 4 is second clad layer 3 when the polymeric optical waveguide film is bent with the upper side in the drawing being convexed.
The specific outer layer in FIG. 5 is first clad layer 1 when the polymeric optical waveguide film is bent with the lower side in the drawing being convexed.

In the case of the above "4-layer groove-type" or "4-layer lithography-type" polymeric optical waveguide film, a specific outer layer corresponds to first clad layer 1, second clad layer 3 or base layer 6, which is grooved through cutting work or partially cut for groove formation and which comes on the outside of core 20 when the polymeric optical waveguide film is bent.
In this case the specific outer layer is preferably base layer 6 because base layer 6 is a layer fundamentally provided for the protection or the like of a polymeric optical waveguide film and is thus made of material with high flexibility and hardness so that sliding resistance can be enhanced.
In the case of a multi-layer polymeric optical waveguide film having four or more layers, a specific outer layer may be composed of one or two or more layers. Moreover, as to embodiments of the multi-layer polymeric optical waveguide film having a specific outer layer composed of two or more layers, not only embodiments where first clad layer 1 and base layer 6 are directly adjacent with each other as shown in FIG 6, but also embodiments where first clad layer 1 and base layer 6 are not directly adjacent with each other are included.

Specifically, in FIG. 6, the specific outer layer is second clad layer 3 when the polymeric optical waveguide film is bent with the upper side in the drawing being convexted, or base layer 6 and first clad layer 1 when the polymeric optical waveguide film is bent with the lower side in the drawing being convexted.

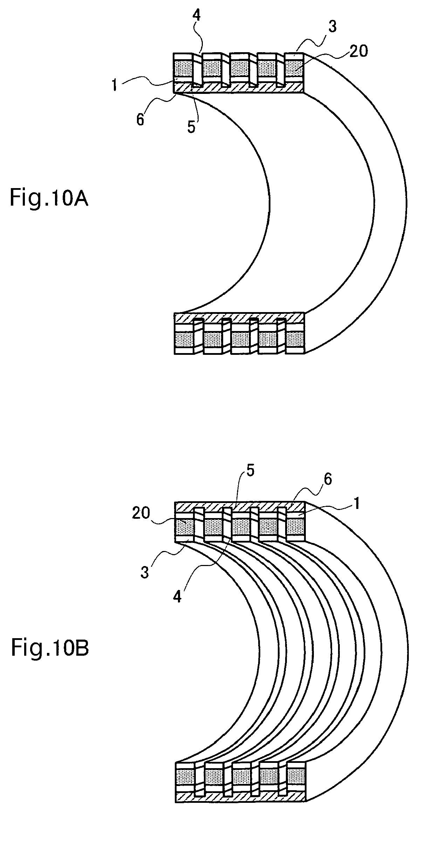

FIGS. 10A and 10B are perspective views each showing an example of a state where the polymeric optical waveguide film of FIG. 6 is bent. FIG. 10A shows a state where second clad layer 3 becomes a specific outer layer, and FIG. 10B shows a state where first clad layer 1 and base layer 6 become a specific outer layer.
The specific outer layer in FIG. 7 is second clad layer 3 when the polymeric optical waveguide film is bent with the upper side in the drawing being convexed, or base layer and first clad layer 1 when the polymeric optical waveguide film is bent with the lower side in the drawing being convexed.
The specific outer layer in FIG. 8 includes base layer 6 and first clad layer 1, when the polymeric optical waveguide film is bent with the lower side in the drawing being convexed.
When first clad layer 1, second clad layer 2 or base layer 6, which constitutes a specific outer layer, is subjected to sliding flexure, it may result in transparency reduction due to generation of minute cracks. However, this presents no problem as to the performance of a polymeric optical waveguide film because these layers hardly influence light propagation loss.

As described above, a polymeric optical waveguide film of the present invention needs to have excellent balance of sliding resistance and workability. To achieve this, a 0.06mm-thick test piece of "polymer material of the specific outer layer upon bending of the film" needs to have a tensile modulus of 0.1 to less than 1 GPa at room temperature, preferably 0.5-0.9 GPa.
Tensile modulus can be found using the slope of a tangent line to a stress-strain curve obtained in a room temperature tensile test of the 0.06mm-thick test piece in accordance with JIS K7161: 1994.

For example, when first clad layer 1 becomes a specific outer layer in the case of a 3-layer polymeric optical waveguide film, it is only necessary for the polymer material of the 0.06mm-thick test piece to have a tensile modulus falling within the above range at room temperature.

Moreover, it is preferable that a 0.06mm-thick test piece of the polymer material have an elongation of 10-50% from the yield point to rupture point in a stress-strain curve measured in a room temperature tensile test. When the elongation is high, the polymer material can withstand great deformation and thus offer high sliding resistance.
"Yield point" means a point on a stress-stain curve from which strain increases without any further increase in stress. "Rupture point" means a point on a stress-stain curve at which a tensile test sample ruptures. "Elongation from the yield point to rupture point" means a percentage ratio of the elongation amount of sample from the yield point to rupture point with respect to the original sample length. In general, brittle materials rupture nearly at the yield point. Rupture-resistant materials, on the other hand, continue to elongate even after exceeding their yield point. Moreover, some rupture-resistance materials never rupture; in this case, they have an infinite elongation.

In general, a resin test piece has an increased tensile modulus when the resin's main chain structure is rigid. Accordingly, in order to adjust the tensile modulus of a resin test piece to fall within the above range, moderate rigidity may be imparted to the resin's main chain structure. Alternatively, for this adjustment, two or more different resins may be mixed that have different tensile modulus values.

Preferred examples of the specific outer layer according to the present invention include polyimide resin layers. Polyimide resins generally have high tensile modulus (2 GPa or more) when formed into a test piece with a predetermined thickness. However, by selection of appropriate combinations of diamine components and acid dianhydride components as polyimide resin sources, it is possible to adjust the tensile modulus of a polyimide resin test piece with a given thickness to be within the claimed range (0.1 to less than 1.0 GPa).

A first example of polyimide resins suitable for achieving the above tensile modulus range is silicone-modified polyimide resins in which a polysiloxane chain is introduced (siloxane skeleton-containing polyimide resins). Blending a silicon-modified polyimide in which such a flexible polysiloxane chain is introduced can desirably reduce tensile modulus virtually without changing other resin properties. Silicone-modified polyimide resins can be prepared by any known method, preferably by condensation reaction between a tetracarboxylic acid dianhydride component and a diamine component consisting of a polysiloxane having amine groups at the terminals.
The "diamine component consisting of a polysiloxane having amine groups at the terminals" may be used alone or combined with other diamine compounds which are sources of the above polyimide resins. Polysiloxane is a polymer in which the main chain is composed of repeating silicon-oxide units.
Preferably, the "diamine component consisting of a polysiloxane having amine groups at the terminals" is contained in an amount of 5-25mol% based on the total diamine components of polyimide resin.

It is preferable to employ silicone-modified polyimide resins prepared by polycondensation reaction between (1) as a diamine component a mixture of a polysiloxane having amino groups at the terminals and 2,2-bis(trifluoromethyl)-4,4'-diaminobiphenyl (TFDB) and (2) as a tetracarboxylic acid dianhydride component 2,2-bis(3,4-dicarboxyphenyl)hexafluoropropane dianhydride (6FDA). The reason for this is that these silicone-modified polyimide resins have a tensile modulus of 0.1 to less than 1 GPa as measured with respect to their 0.06mm-thick test piece at room temperature, and offer excellent optical characteristics as a clad material. Moreover, the above silicone-modified polyimide resins are preferable because the elongation from the yield point to rupture point at room temperature, as measured with respect to their 0.06mm-thick test piece, is 10-50%.

A second example of polyimide resins suitable for achieving the above tensile modulus range is polyimide resins having a repeating unit represented by the following general formula (1). 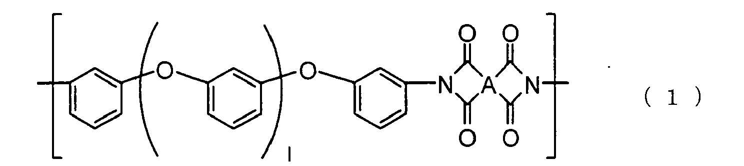 (where 1 denotes an integer of 1-7; and A denotes a tetravalent organic group)
Polyimide resins having the above repeating unit never raise such problems as bleeding and stains - which may be encountered in using the above siloxane skeleton-containing polyimide resins - and offer excellent flexibility.

The diamine unit constituting the above polyimide resin has a structural unit in which benzene rings are liked together at meta positions via ether bonds, thereby imparting flexibility to the polyimide resin. In general formula (1) above "1" denotes an integer of 1-7, but preferably an integer of 3-5 because flexibility can be adjusted appropriately. When "1" is an integer of less than 3, it results in poor flexibility, and when "1" is an integer of greater than 7, it results not only in too high flexibility, but also in high production costs. As the diamines used as sources of the above polyimide resins, one kind of diamines may be used alone, or diamines having different numbers of "1" may be combined.

The organic group A constituting the above polyimide resin is a group derived from tetracarboxylic acid dianhydrides; it is a tetravalent aliphatic group or tetravalent aromatic group, preferably a tetravalent aromatic group.
The tetravalent aromatic group is either "tetravalent aromatic group consisting of one aromatic ring to which all of the carbonyl groups are bonded" or "tetravalent group containing two or more aromatic rings, where two of the carbonyl groups are bonded to one of the aromatic rings and the other two of the carbonyl groups are bonded to the other aromatic ring."
The aromatic ring may be either an aromatic hydrocarbon or aromatic heterocycle, but preferably an aromatic hydrocarbon. Examples of the aromatic hydrocarbon include benzene, naphthalene, and aromatic rings consisting of three or more fused benzene rings. The "tetravalent group containing two or more aromatic rings" include groups in which two aromatic hydrocarbons are linked directly or indirectly, such as biphenyl in which two benzenes are directly linked together, benzophenone in which two benzenes are linked together via CO, and groups in which two benzenes are linked together via O, SO₂, S, CH₂, C(CH₃)₂, CF₂ or C(CF₃)₂. Among them, 2,2-bis(3,4-dicarboxyphenyl)hexafluoropropane dianhydride (6FDA) and 3,3',4,4'-diphenylethertetracarboxylic acid dianhydride (ODPA), etc., are preferable because flexibility can be readily adjusted while ensuring moderate rigidity.
Examples of the tetracarboxylic acid dianhydrides include pyromellitic acid dianhydride, 3,3',4,4'-diphenylethertetracarboxylic acid dianhydride, 3,3',4,4'-diphenyltetracarboxylic acid dianhydride, 2,2',3,3'-diphenyltetracarboxylic acid dianhydride, 2,2-bis(3,4-dicarboxyphenyl)propane dianhydride, 2,2-bis(2,3-dicarboxyphenyl)propane dianhydride, 1,1-bis(2,3-dicarboxyphenyl)ethane dianhydride, 1,1-bis(3,4-dicarboxyphenyl)ethane dianhydride, bis(2,3-dicarboxyphenyl)methane dianhydride, bis(3,4-dicarboxyphenyl)methane dianhydride, bis(3,4-dicarboxyphenyl)sulfone dianhydride, 3,4,9,10-perylenetetracarboxylic acid dianhydride, bis(3,4-dicarboxyphenyl)ether dianhydride, benzene-1,2,3,4-tetracarboxylic acid dianhydride, 3,4,3',4'-benzophenonentetracarboxylic acid dianhydride, 2,3,2',3-benzophenonentetracarboxylic acid dianhydride, 2,3,3',4'-benzophenonentetracarboxylic acid dianhydride, 1,2,5,6-naphthalenetetracarboxylic acid dianhydride, 2.3,6,7-naphthalenetetracarboxylic acid dianhydride, 1,2,4,5-naphthalenetetracarboxylic acid dianhydride. 1,4,5,8-naphthalenetetracarboxylic acid dianhydride, 2,6-dichloronaphthalene-1,4,5,8-tetracarboxylic acid dianhydride, 2,7-dichloronaphthalene-1,4,5,8-tetracarboxylic acid dianhydride, 2,3,6,7-tetrachloronaphthalene-1,4,5,8-tetracarboxylic acid dianhydride, phenanthrene-1,8,9,10-tetracarboxylic acid dianhydride, pyrazine-2.3,5,6-tetracarboxylic acid dianhydride, thiophene-2,3,4,5-tetracarboxylic acid dianhydride, 2,3,3',4'-biphenyltetracarboxylic acid dianhydride, 3,4,3',4'-biphenyltetracarboxylic acid dianhydride, 2,3,2',3'-biphenyltetracarboxylic acid dianhydride, bis(3,4-dicarboxyphenyl)dimethylsilane dianhydride, bis(3,4-dicarboxyphenyl)methylphenylsilane dianhydride, bis(3,4-dicarboxyphenyl)diphenylsilane dianhydride, 1,4-bis(3,4-dicarboxyphenyldimethylsilyl)benzene dianhydride, 1,3-bis(3,4-dicarboxyphenyl)-1,1,3,3-tetramethyldicyclohexane dianhydride, p-phenylbis(trimellitic acid monoester anhydride), ethylenetetracarboxylic acid dianhydride, 1,2,3,4-butanetetracarboxylic acid dianhydride, decahydronaphthalene-1,4,5,8-tetracarboxylic acid dianhydride, 4,8-dimethyl-1;2,3,5,6,7-hexahydronapthalene-1,2,5,6-tetracarbox ylic acid dianhydride, cyclopentane-1,2,3,4-tetracarboxylic acid dianhydride, pyrrolidine-2,3,4,5-tetracarboxylic acid dianhydride, 1,2,3,4-cyclobutanetetracarboxylic acid dianhydride, bis(exo-bicyclo[2,2,1]heptane-2,3-dicarboxylic acid anhydride)sulfone, bicyclo(2,2,2)-oct(7)-ene-2,3,5,6-tetracarboxylic acid dianhydride, 2,2-bis(3,4-dicarboxyphenyl)hexafluoropropane dianhydride, 2,2-bis[4-(3,4-dicarboxyphenoxy)phenyl]hexafluoropropane dianhydride, 4,4'-bis(3,4-dicarboxyphenoxy)diphenylsulfide dianhydride, 1,4-bis(2-hydoxyhexafluoroisopropyl)benzene bis(trimellitic acid anhydride), 1,3-bis(2-hydroxyhexafluoroisopropylbenzene bis(trimellitic acid anhydride), 5-(2,5-dioxotetrahydrofuryl)-3-methyl-3-cyclobexene-1,2-dicarbo xylic acid dianhydride, tetrahydrofuran-2,3,4,5-tetracarboxylic acid dianhydride, and ethylene glycol bistrimellitate dianhydride. Tetracarboxylic acid dianhydrides may be used in combination.

### (4) Physical properties of polymeric optical waveguide film

### 1) Sliding resistance of polymeric optical waveguide film

Sliding resistance is preferably evaluated as the number of sliding flexure at which a test polymeric optical waveguide film ruptures, by using a sliding test machine in accordance with JIS C 5016 8.6 under the following condition: plate gap = 2mm; slide speed = 500 rpm; and stroke = 30mm. In the case of a 3-layer polymeric optical waveguide film, the film is bent such that a first clad layer or second clad layer, which has been grooved by cutting work and has a tensile modulus of 0.1 to less than 1.0 GPa as measured with respect to its 0.06mm-thick test piece at room temperature, comes on the outside of cores. In the case of a 4-layer polymeric optical waveguide film, the film is bent such that a first clad layer, second clad layer or base layer, which has been grooved by cutting work and has a tensile modulus of 0.1 to less than 1.0 GPa as measured with respect to its 0.06mm-thick test piece at room temperature, comes on the outside of cores.

In the sliding test a polymeric optical waveguide film of the present invention preferably exhibits a sliding resistance of 100,000 times or more, more preferably 250,000 times or more. This is because a polymeric optical waveguide film exhibiting a sliding resistance of 100,000 times or more, particularly a polymeric optical waveguide film exhibiting a sliding resistance of 250,000 times or more, can exert excellent sliding resistance when used for slide cellular phones.

### 2) Surface roughness of cut surface of polymeric optical waveguide film

The cut surface at a bend point of a polymeric optical waveguide film preferably has a surface roughness Ra of 0.4um or less, particularly preferably 0.2µm or less, because in this surface roughness range the cut surface has only small amounts of burrs or cutting dusts, making the cut surface difficult to rupture and imparting high sliding resistance. "Cut surface at a bend point" refers to an entire cut surface at a bend point, which is exposed as a result of cutting work, particularly a cut surface of a specific outer layer at a bend point.
Surface roughness Ra can be measured by atomic force microscopy (AFM), for example. Measurement site is a cut surface of polyimide resin, e.g., groove side surface or groove bottom surface.

### 2. Manufacturing method of polymeric optical waveguide film

A polymeric optical waveguide film of the present invention can be manufactured by any method as long as the effect of the invention is not impaired. The following describes preferable manufacturing methods.

### (1) Manufacturing method of 3-layer groove-type polymeric optical waveguide film

Preferably, a polymeric optical waveguide film like that shown in FIGS. 1A and 1B is manufactured by a method including the steps of:
A) preparing a laminate consisting of, in order, first clad layer 1, core layer 2, and second clad layer 3 (FIG. 1A); and
B) forming, by cutting work on laminate 7, two or more grooves 4 to define cores 20 therebetween, the grooves cutting through, at portions, the full thickness of second clad layer 3 and core layer 2 and partial thickness of first clad layer 1, and having groove bottom 5 inside first clad layer 1.

Alternatively, step A) above may be accomplished by laminating, in order, first clad layer 1, core layer 2 and second clad layer 3 on a substrate, or by forming first clad layer 1 on one side of core layer 2, and then second clad layer 3 on the other side of core layer 2. Examples of the substrate include silicon wafers.

For each layer, a specific formation method varies depending on the kind of material from which it is made. For example, when the material is polyimide resin, the layer can be prepared by applying a polyamic acid solution and heating it for imidization. Application of a polyamic acid solution can be accomplished by spin coating, for example.

In step B), grooves 4 are formed in laminate 7 prepared in A) step. Formation of grooves 4 is accomplished by cutting work using, for example, a dicing saw, a diamond cutter, or a milling cutter. FIG. 1B shows a polymeric optical waveguide film in which three grooves 4 are provided through cutting work. Cores 20 are defined in regions sandwiched by two of grooves 4. This polymeric optical waveguide film can be cut into desired size for use, including cores 20 and grooves 4. The cut surface of groove 4 may be coated with clad material; the thickness of the coating layer may be about 1µm.

### (2) Manufacturing method of 4-layer groove-type polymeric optical waveguide film

Preferably, a polymeric optical waveguide film like that shown in FIG. 6 is manufactured by a method including the steps of:
A') preparing a laminate consisting of, in order, base layer 6, first clad layer 1, core layer 2, and second clad layer 3; and
B') forming, by cutting work on the laminate, two or more grooves 4 to define cores 20 therebetween, the grooves cutting through, at portions, the full thickness of second clad layer 3, core layer 2 and first clad layer 1 and partial thickness of base layer 6, and having groove bottom 5 inside base layer 6.

When base layer 6 is not cut in the polymeric optical waveguide film of FIG. 6, e.g., when groove bottom 5 is formed inside first clad layer 1, a 3-layer laminate without base layer 6 is prepared in step A'), and then base layer 6 is provided after step B').

### (3) Manufacturing method of 3-layer lithography-type polymeric optical waveguide film

Preferably, a polymeric optical waveguide film like that shown in FIG. 3 is manufactured by a method including the steps of:
C) preparing a laminate consisting of, in order, first clad layer 1 and core layer 2;
D) patterning core layer 2 by photolithography, ion etching, etc., to form core patterns and eliminating the residual core layer 2;
E) laminating second clad layer 3 on the laminate of step D); and
F) forming, by cutting work on the laminate in accordance with the above step B), two or more grooves 4 which cut through, at portions, the full thickness of second clad layer 3 and partial thickness of first clad layer 1 and which have groove bottom 5 inside first clad layer 1.

### (4) Manufacturing method of 4-layer lithography-type polymeric optical waveguide film

Preferably, a polymeric optical waveguide film like that shown in FIG. 7 is manufactured by a method including the steps of:
C') preparing a laminate consisting of, in order, base layer 6, first clad layer 1 and core layer 2;
D') patterning core layer 2 by photolithography, ion etching, etc., to form core patterns and eliminating the residual core layer 2;
E') laminating second clad layer 3 on the laminate of step D); and
F') forming, by cutting work on the laminate in accordance with the above step B), two or more grooves 4 which cut through, at portions, the full thickness of second clad layer 3 and first clad layer 1 and partial thickness of base layer 6 and which have groove bottom 5 inside base layer 6.

When base layer 6 is not cut in the polymeric optical waveguide film of FIG. 7, e.g., when groove bottom 5 is formed inside first clad layer 1, a 3-layer laminate without base layer 6 is prepared in step C'), and then base layer 6 is provided after performing steps D'), E'), and F').

Manufacturing methods of the polymeric optical waveguide films shown in FIGS. 1, 3, 6 and 7 have been described above. Note that the polymeric optical waveguide films shown in FIGS. 2, 4 and 5 can be similarly manufactured as described above using appropriate materials and cutting conditions.

Conventional polymeric optical waveguide films use materials with relatively high tensile modulus. For this reason, during manufacturing, the film can be cut with high accuracy through cutting work, and during cutting work, such problems as rough cut surface or generation and attachment of burrs or cutting dusts hardly occur (i.e., the film shows excellent workability).
A polymeric optical waveguide film of the present invention, on the other hand, uses a clad material with relatively low tensile modulus in order to achieve high sliding resistance. Thus, there is concern that the above problems occur during cutting work (i.e., the film shows poor workability). Materials with low tensile modulus tend to cause the above problem, as they easily remove the stress acting on the sample during cutting work by converting the stress into heat and dissipating the heat, and, therefore, the sample is susceptible to deformation. Cutting workability reduction influences performance of a polymeric optical waveguide film as described below.

Using the polymeric optical waveguide film shown in FIG. 2 as an example, influences on the polymeric optical waveguide film due to workability reduction will be described.
Firstly, when problems such as attachment of burrs or cutting dusts to the cut surface of first clad layer 1 and second clad layer 3 occur during cutting work, some of the burrs and cutting dusts come in contact with cores and thereby may increase light propagation loss, leading to poor light propagation performance.
Secondly, when problems such as failure to conduct precise cutting work as designed due to deformed cutting surface occur, it result in poor positional accuracy of cut end surfaces in the film. These cut end surfaces may serve as alignment references for bonding of the film to another electrical component such as an electrical circuit film. Thus, when film cutting accuracy is reduced, bonding accuracy with other components may also be reduced.
Furthermore, burrs and cutting dusts attached to the cut surfaces of first clad layer 1 and second clad layer 3 serve as rupture points at the time when the polymeric optical waveguide film is subjected to sliding flexure, leading to possible sliding resistance reduction.

By contrast, a polymeric optical waveguide film of the present invention uses, for a specific outer layer, a material whose tensile modulus falling within a specific range as measured with respect to its test sample of a given thickness, wherein the specific outer layer is a layer which comes on the outside of the core when the film is bent and in which full thickness or partial thickness of portions is removed through cutting work. Thus, in the present invention, the above problems are less likely to occur, and light propagation characteristics and cutting precision are not impaired.

### 3. Electrical device including a polymeric optical waveguide film of the present invention

A polymeric optical waveguide film of the present invention can be used for electrical devices including cellular phones. As the polymeric optical waveguide film of the present invention exhibits high sliding resistance as described above, it is suitable for use in slide cellular phones where a polymeric optical waveguide film is housed in a bent state, particularly for use in slide cellular phones where a polymeric optical waveguide film is bent for housing such that the bend point has a curvature diameter of 2mm or les.

When a polymeric optical waveguide film of the present invention is housed in an electrical device in a bent state, the layer which is grooved by cutting work and comes on the outside of the core when the film is bent (specific outer layer), may be a layer which is cut by grooves provided in the polymeric optical waveguide film (e.g., second clad layer 3 in FIGS. 1A and 1B, or a layer having groove bottoms (e.g., first clad layer 1 in FIGS. 1A and 1B). When the specific outer layer is a layer having groove bottoms, the polymeric optical waveguide film show enhanced sliding resistance. Thus, when the polymeric optical waveguide film of the present invention is to be housed in an electrical device in a bent state, it is preferable that the specific outer layer be a layer having groove bottoms.

### Examples

### Example 1: Manufacturing of a polymeric optical waveguide film shown in FIGS. 1A and 1B

A polyamic acid solution (OPI-N3405: Hitachi Chemical Co., Ltd.) was prepared which includes a copolymer of 2,2-bis(3,4-dicarboxyphenyl)hexafluoropropane dianhydride (6FDA) and 2,2-bis(trifluoromethyl)-4,4'-diaminobiphenyl (TFDB) and a copolymer of 6FDA and 4,4'-oxydianiline (ODA).
This solution was applied onto an 8-inch silicon wafer by spin coating and heated to form a film having 50µm thickness. This silicon wafer was immersed in aqueous hydrofluoric acid solution to peel off the 50µm-thick film from the silicon wafer.

A silicone-modified polyamic acid solution consisting of N,N-dimethylacetoamide, 6FDA, 1,3-bis(3-aminopropyl)tetramethysiloxane as a siloxane diamine, and TFDB was prepared. The mole ratio between siloxane diamine and TFDB was set to 15:85.

The silicone-modified polyamic acid solution was applied on one side of the 50µm-thick film as core layer 2, and heated at 250°C to form thereon first clad layer 1. The thickness of first clad layer 1 after heat treatment was set to 20µm. Similarly, the silicone-modified polyamic acid solution was applied on the other side of the film and heated to form thereon second clad layer 3. The thickness of second clad layer 3 after heat treatment was set to 7µm. In this way a laminate consisting, in order, first clad layer 1, core layer 2, and second clad layer 3 was obtained. The laminate was then cut into a 5cm x 8cm piece.

Grooves 4 were formed in the laminate by dicing. More specifically, two linear grooves 4 were formed under the condition that a dicing blade moves down far enough to penetrate through both second clad layer 3 and core layer 2 and stop inside first clad layer 1. Note that although the polymeric optical waveguide film of FIGS. 1A and 1B is shown to have three grooves 4, two grooves 4 are formed in this Example. Grooves 4 were provided in parallel with the short sides (5cm-sides) of the laminate. Core 20 through which light propagates was formed between grooves 4. In this Example a dicing blade with a width of 30µm was employed. Thus, by setting the distance between the centers of two grooves 4 to 130µm, core 20 with a width of about 100µm was formed between adjacent grooves 4.

Polymeric optical waveguide films which are 3mm in width and have cores running along the length were cut out by dicing the laminate having grooves 4. The cut surfaces of grooves 4 and ends of the obtained polymeric optical waveguide films were smooth; there were nearly no remaining cutting dusts. Each of the obtained polymeric optical waveguide films showed excellent workability as they were exactly shaped as designed.

The polymeric optical waveguide films obtained above were tested for sliding resistance in a state where they are bent so that first clad layer 1 comes on the outside of the core. The sliding resistance test was conducted using a test machine in accordance with JIS C 5016 8.6 (flexure resistance) at a plate gap of 2mm, sliding speed of 500rpm, and stoke of 30mm. The number of sliding flexure at which the test polymeric optical waveguide film ruptured was measured. As a result of the sliding resistance test, the polymeric optical waveguide films did not rupture even after sliding of over 400,000 times.

Further, the polymeric optical waveguide films were tested for optical propagation loss in accordance with Test Method for Polymeric Optical Waveguide (JPCA-PE02-05-01S-2005 Item 5.3.2: light propagation loss). Light propagation loss at 850nm wavelength was 0.2 dB/cm.

Using a 0.06mm-thick test piece of the clad material of first clad layer 1 or second clad layer 3, a tensile test was conducted at room temperature in accordance with JIS K7161:1994, and the tensile modulus of the test piece was found using the slope of a tangent line to a stress-strain curve. The test piece had a tensile modulus of 0.5 GPa at room temperature. In the stress-strain curve, it was found that the test piece had a plastic elongation region where the sample elongates even after exceeding the yield point. The elongation of the test piece from the yield point to rupture point (also simply referred to as "elongation") was about 18%.

### Example 2: Manufacturing of a polymeric optical waveguide film shown in FIGS. 1A and 1B

Polymeric optical waveguide films were manufactured as in Example 1 except that the mole ratio between siloxane diamine and TFDB in the silicone-modified polyamic acid solution was set to 8:92. The obtained polymeric optical waveguide films were evaluated as in Example 1.
As a result, it was found that the polymeric optical waveguide films did not rupture even after sliding of over 250,000 times. Further, in the light propagation loss test, light propagation loss at 850nm wavelength was 0.2 dB/cm. The tensile modulus of a 0.06mm-thick test piece of the clad material at room temperature was 0.9 GPa, and the elongation thereof was about 10%.

### Example 3: Manufacturing of a polymeric optical waveguide film shown in FIG. 4

The silicone-modified polyamic acid solution prepared in Example 1 was applied onto a silicon wafer, and heated for curing to form first clad layer 1 having 20µm thickness. OPI-N3405 (Hitachi Chemical Co., Ltd.) was applied onto first clad layer 1 and heated for curing to form thereon a core layer (not shown). The thickness of the core layer was set to 35µm.

The core layer was then patterned by photolithography and oxygen plasma etching to form two linear cores 20. The width of core 20 was set to 50µm and core pitch was set to 500µm.

The silicone-modified polyamic acid solution was applied onto cores 20 and heated for curing to form thereon second clad layer 3. The thickness of second clad layer 3 on cores 20 was 10µm. The thickness of second clad layer 3 at regions other than cores 20, i.e., on first clad layer 1 was 20µm.
The laminate obtained in this way was immersed in 5wt% aqueous hydrofluoric acid solution to peel off a polymeric optical waveguide film from the silicon wafer.

The polymeric optical waveguide film was then cut into a 5cm x 8cm piece. At this point, the film was cut in such a way that the short sides (5cm-side) are in parallel with the running direction of linear cores 20. Using a dicing blade with a width of 30µm, two grooves 4 were formed in the polymeric optical waveguide film. Grooves 4 were provided along cores 20 in such a way that, referring to FIG. 4, the left longer side of one groove 4 is located 100µm away from the right longer side of left core 20 and that the right longer side of the other groove 4 is located 100µm away from the left longer side of right core 20.

Polymeric optical waveguide films which are 3mm in width and have cores running along the length were cut out by dicing the laminate having grooves 4. The cut surfaces of grooves 4 and ends of the obtained polymeric optical waveguide films were smooth; there were nearly no remaining cutting dusts. Each of the obtained polymeric optical waveguide films showed excellent workability as they were exactly shaped as designed.
The obtained polymeric optical waveguide films were evaluated as in Example 1.
As a result, it was found that the polymeric optical waveguide films had sliding resistance of over 300,000 times. The tensile modulus of a 0.06mm-thick test piece of the clad material at room temperature was 0.5 GPa.

### Example 4: Manufacturing of a polymeric optical waveguide film shown in FIG. 6

OPI-N3405 (Hitachi Chemical Co., Ltd.) was applied onto an 8-inch silicon wafer by spin coating and heated. The film thickness after heat treatment was set to 50µm. The product was immersed in aqueous hydrofluoric acid solution to peel off the resultant film from the silicon wafer, to obtain a core layer (not shown). Next, a polyamic acid solution (OPI-N1005: Hitachi Chemical Co., Ltd.) consisting of 2,2-bis(3,4-dicarboxyphenyl)hexafluoropropane dianhydride (6FDA) and 2,2-bis(trifluoromethyl)-4,4'-diaminobiphenyl (TFDB) was applied onto one side of the core layer by spin coating, and dried at 70°C for 30 minutes to form thereon first clad layer 1. The thickness of first clad layer 1 after drying was set to 7µm. Further, OPI-N1005 was applied on the other side of the core layer and dried at 70°C for 30 minutes to form thereon second clad layer 3. The thickness of second clad layer 3 after drying was set to 7µm. The laminate obtained in this way was further dried at 320°C for 1 hour.

The laminate was placed with first clad layer 1 face-up. The silicone-modified polyamic acid solution prepared in Example 1 was applied onto first clad layer 1, and dried at 300°C to form thereon base layer 6. The thickness of base layer 6 after drying was set to 10µm. In this way a 4-layer laminate in which base layer 6 is formed under first clad layer 1 was prepared.

The laminate was then cut into a 10cm x 10cm piece using a cutter, and grooves 4 were formed in the laminate by dicing. More specifically, two linear grooves 4 were formed under the condition that a dicing blade moves down far enough to penetrate through second clad layer 3, core layer and first clad layer 1, and stop inside base layer 6. Note that although the polymeric optical waveguide film of FIG.6 is shown to have three grooves 4, two grooves 4 are formed in this Example. Grooves 4 were provided in parallel with opposite sides of the laminate. Core 20 through which light propagates was formed between grooves 4. In this Example a dicing blade with a width of 30µm was employed. Thus, by setting the distance between the centers of two grooves 4 to 130µm, core 20 with a width of about 100µm was formed between adjacent grooves 4.

Polymeric optical waveguide films which are 3mm in width and have cores running along the length were cut out by dicing the laminate having grooves 4. The cut surfaces of grooves 4 and ends of the obtained polymeric optical waveguide films were smooth; there were nearly no remaining cutting dusts. Each of the obtained polymeric optical waveguide films showed excellent workability as they were exactly shaped as designed.

The polymeric optical waveguide films obtained above were tested for sliding resistance in a state where they are bent so that base layer 6 comes on the outside of the core. As a result of the sliding resistance test, the polymeric optical waveguide films did not rupture even after sliding of over 300,000 times. The tensile modulus of a 0.06mm-thick test piece of the clad material at room temperature was 0.5 GPa, and the elongation thereof was about 18%.

### Example 5

In stead of the clad material prepared in Example 1, a polyimide resin obtained from 1,3-bis(3-(3-aminophenoxy)phenoxy)benzene (APB5) as a diamine component and 3,3',4,4'-diphenylethertetracarboxylic acid dianhydride (ODPA) as an acid dianhydride component was prepared in the same manner as in Example 1. The mole ratio between diamine component and acid dianhydride component was set to 1:1 on a formulation basis. The tensile modulus of a 0.06mm-thick test piece of the clad material at room temperature was 0.9 GPa,
Using the clad material prepared above, polymeric optical waveguide films were prepared as in Example 1 and measured for light propagation loss. The measured values were almost on a par with those measured in Examples 1 and 2. The polymeric optical waveguide films include a clad material having a tensile modulus comparable with that of the clad material prepared in Example 1, which is measured with respect to a 0.06mm-thick test piece at room temperature. This suggest that the polymeric optical waveguide films in this Example may offer high sliding resistance comparable with that of the polymeric optical waveguide films prepared in Example 1.
Thus, it was established that the clad material made of the polyimide resin in this Example 1 can be equally used as the clad materials made of the siloxane skeleton-containing polyimide resins in Examples 1 and 2

### Comparative Example 1

OPI-N1005 (Hitachi Chemical Co., Ltd.) was prepared. This polyamic acid solution was applied onto an 8-inch silicon wafer by spin coating and heated to form thereon a first clad layer having 20µm thickness.

OPI-N3405 (Hitachi Chemical Co., Ltd.) was applied onto first clad layer 1 by spin coating and heated to form thereon a core layer. The thickness of the core layer after heat treatment was set to 50µm. OPI-N1005 (Hitachi Chemical Co., Ltd.) was applied onto the core layer and heated to form thereon a second clad layer. The thickness of the second clad layer after heat treatment was set to 7µm.

Subsequently, the laminate obtained in this way was immersed in aqueous hydrofluoric acid solution to peel off a polymeric optical waveguide film from the silicon wafer. The polymeric optical waveguide film was then cut into a 5cm x 8cm piece. In this way a polyimide resin laminate consisting of, in order, first clad layer, core layer and second clad layer was obtained. Heat treatments in this Comparative Example were conducted at 340°C for 1 hour.

Grooves were formed in the laminate by dicing as in Example 1. More specifically, two linear grooves were formed under the condition that a dicing blade moves down far enough to penetrate through both the second clad layer (7µm) and core layer and stop inside the first clad layer (20µm). A core through which light propagates was formed between the grooves. In this Comparative Example a dicing blade with a width of 30µm was employed. Thus, by setting the distance between the centers of the two grooves to 130µm, a core with a width of about 100µm was formed between the adjacent grooves.

As in Example 1, polymeric optical waveguide films which are 3mm in width were cut out by dicing the laminate having the grooves. The cut surfaces of the grooves and ends of the obtained polymeric optical waveguide films were smooth; there were nearly no remaining cutting dusts. Each of the obtained polymeric optical waveguide films showed excellent workability as they were exactly shaped as designed.

The polymeric optical waveguide films were tested for sliding resistance as in Examples. Rupture occurred at sliding flexure of 50,000 times. Further, it was found that rupture occurred from the first clad layer that comes on the outside of the core.
The polymeric optical waveguide films were tested for optical propagation loss as in Examples. Light propagation loss at 850nm wavelength was 0.2 dB/cm.

Further, as in Examples, a 0.06mm-thick test piece of the polyimide resin of the clad material and a 0.06mm-thick test piece of the polyimide resin of the core material used in the Comparative Example were measured for tensile modulus at room temperature. Both of the test pieces had a tensile modulus of about 2 GPa. In their stress-strain curve there was almost no plastic elongation region, revealing that the test samples ruptured immediately after the yield point.

### Comparative Example 2

OPI-N3405 (Hitachi Chemical Co., Ltd.) was applied onto an 8-inch silicon wafer by spin coating and heated to form a film. The film thickness after heat treatment was set to 50µm. The laminate obtained in this way was immersed in aqueous hydrofluoric acid solution to peel off a polymeric optical waveguide film from the silicon wafer.
A silicone-modified epoxy resin (FX-W711: ADEKA Corporation) was applied onto one side of the film, irradiated with UV light, and heated at 120°C to form thereon a second clad layer having 7µm thickness. Similarly, using FX-W711, a first clad layer having 20µm thickness was formed on the other side of the film. The laminate obtained above was cut into a 10cm x 10cm piece.

As in Comparative Example 1, grooves were formed in the laminate, and polymeric optical waveguide films which are 3mm in width were cut out by dicing the laminate. The cut surfaces of the grooves and ends of the obtained polymeric optical waveguide films were almost free from burrs or cutting dusts. Each of the obtained polymeric optical waveguide films showed excellent workability as they were exactly shaped as designed.

The polymeric optical waveguide films were tested for sliding resistance as in Examples. Rupture occurred at sliding flexure of 30,000 times. Further, it was found that rupture occurred from the first clad layer that comes on the outside of the core, and that may cracks were observed around the rupture point.

The polymeric optical waveguide films were tested for optical propagation loss as in Examples. Light propagation loss at 850nm wavelength was 0.2 dB/cm.

Further, as in Examples, a 0.06mm-thick test piece of FX-W711, which is the clad material, was measured for tensile modulus at room temperature. The test piece had a tensile modulus of 1.5 GPa. In the stress-strain curve it was confirmed that no elongation occurred after the yield point.

### Comparative Example 3

OPI-N3405 (Hitachi Chemical Co., Ltd.) was applied onto an 8-inch silicon wafer by spin coating and heated to form a film. The film thickness after heat treatment was set to 50µm. The laminate obtained in this way was immersed in aqueous hydrofluoric acid solution to peel off the 50µm-thick film from the silicon wafer.
A silicone resin (FX-T121: ADEKA Corporation) was applied onto one side of the film, and heated at 120°C to form thereon a second clad layer. The film thickness after heat treatment was set to 7µm. Similarly, using FX-T121, a first clad layer having 20µm thickness was formed on the other side of the film. Thus, a laminate consisting of, in order, first clad layer, core layer, and second clad layer was prepared.

As in Comparative Example 1, grooves were formed in the laminate, and polymeric optical waveguide films which are 3mm in width were cut out by dicing the laminate. There were an abundance of cutting dusts and burrs in the grooves. In addition, high-precision cutting work failed; the film was not shaped with accuracy. The failure of precise cutting work may be due to the fact that the clad material with a low tensile modulus functions as a "cushion" which lessens the stress acting on the sample during cutting work.

The polymeric optical waveguide films were tested for sliding resistance as in Examples. As a result of the sliding resistance test, the polymeric optical waveguide films did not rupture even after sliding of over 500,000 times.

The polymeric optical waveguide films were tested for optical propagation loss as in Examples. Light propagation loss at 850nm wavelength was 0.9 dB/cm.
A 0.06mm-thick test piece of FX-W121 which is the clad material, was measured for tensile modulus at room temperature. The test piece had a tensile modulus of 30 MPa.

The above results are summarized in Table 1

**Table 1**

| | Tensile modulus of specific outer layer material (GPa) | Elongation (%) | Sliding resistance (times) | Light propagation loss (dB/cm) | Cutting precision |
|---|---|---|---|---|---|
| Example 1 | 0.5 | 18 | Over 400,000 | 0.2 | Good |
| Example 2 | 0.9 | 10 | Over 250,000 | 0.2 | Good |
| Example 3 | 0.5 | 18 | Over 300,000 | - | Good |
| Example 4 | 0.5 | 18 | Over 300,000 | - | Good |
| Comparative Example 1 | 2 | 0 | 50,000 | 0.2 | Good |
| Comparative Example 2 | 1.5 | 0 | 30,000 | 0.2 | Good |
| Comparative Example 3 | 0.03 | - | Over 500,000 | 0.9 | Bad |

From the results of Examples 1-3, it is clear that the polymeric optical waveguide films according to the present invention, in which a specific outer layer is a clad layer made of material having a tensile modulus of 0.1 to less than 1.0 GPa as measured with respect to their 0.06mm-thick test piece at room temperature, show high sliding resistance and high workability, and that light propagation loss is small by virtue of their high workability.
From the result of Example 4, it is clear that the polymeric optical waveguide film according to the present invention, in which a specific outer layer is a base layer made of material having a tensile modulus of 0.1 to less than 1.0 GPa as measured with respect to its 0.06mm-thick test piece at room temperature, shows high sliding resistance and high workability.
On the other hand, from the results of Comparative Examples 1 and 2, it is clear that a clad material having a tensile modulus greater than 1.5 GPa as measured with respect to its 0.06mm-thick test piece at room temperature can provide high workability, but leads to poor sliding resistance. Moreover, from the result of Comparative Example 3, it is clear that a clad material having a very low tensile modulus of 0.03 GPa as measured with respect to its 0.06mm-thick test piece at room temperature can provide extremely high sliding resistance, but lead to poor workability.

### Example 6: Manufacturing of a polymeric optical waveguide film shown in FIGS. 1A and 1B

A polymeric optical waveguide film was prepared which includes a clad material similar to that used in Example 2, i.e., a clad material having a tensile modulus of 0.9 GPa as measured with respect to its 0.06mm-thick test piece. Using a dicing machine (DAD3350: DISCO Corporation), the polymeric optical waveguide film was diced at 30,000rpm to produce 2mm-width polymeric optical waveguide films. The polymeric optical waveguide film was attached to a sample holder at its opposite width sides, with the convex surface face-up. The average surface roughness of the cut surface measured by AFM was 0.4µm.
The polymeric optical waveguide film was tested for sliding resistance in a state where the film is bent so that first clad layer 1 comes on the outside of core 20. As a result of the sliding resistance test, the polymeric optical waveguide film did not rupture even after sliding of over 250,000 times.

### Example 7: Manufacturing of a polymeric optical waveguide film shown in FIGS. 1 A and 1B

A polymeric optical waveguide film was prepared which includes a clad material similar to that used in Example 2, i.e., a clad material having a tensile modulus of 0.9 GPa as measured with respect to its 0.06mm-thick test piece. In stead of the dicing machine in Example 6, a molding cutter matching to the profile of polymeric optical waveguide films to be cut out was employed to produce 2mm-width polymeric optical waveguide films under the same condition as for typical flexible electrical circuit boards. The average surface roughness of the cut surface, measured by AFM as in Example 6, was 0.7µm.
The polymeric optical waveguide films were tested for sliding resistance in a state where the film is bent so that first clad layer 1 comes on the outside of the core. As a result of the sliding resistance test, the polymeric optical waveguide films ruptured after sliding of 100,000 times.

Thus, it was established that the surface roughness Ra of the cut surface at the bend point can be reduced and sliding resistance can be increased, by setting the tensile modulus of the polymer material of a specific outer layer of the bent polymeric optical waveguide film, as measured with respect to its 0.06mm-thick test piece at room temperature, to a value falling within the claimed range.

The present application claims the priority of Japanese Patent Application No.2007-224586 filed on August 30, 2007, the entire contents of which are herein incorporated by reference.

### Industrial Applicability

A polymeric optical waveguide film of the present invention has high sliding resistance and high workability and therefore is suitable for use in thin electrical devices, particularly in slide cellular phones.

Explanation of References
- 1:: First clad layer
- 2:: Core layer
- 3.: Second clad layer
- 4:: Groove
- 5:: Groove bottom
- 6:: Base layer
- 7:: Laminate
- 20:: Core

## Claims

1. A bendable polymeric optical waveguide film comprising:
a first clad layer;
a second clad layer; and
a core held between the first and second clad layers,
wherein the polymeric optical waveguide film includes a groove formed through cutting work, and
wherein a 0.06mm-thick test piece of a polymer material of a layer which comes on the outside of the core when the polymeric optical waveguide film is bent and in which full thickness or partial thickness of portions is removed through the cutting work has a tensile modulus of 0.1 to less than 1.0 GPa at room temperature.

2. A bendable polymeric optical waveguide film comprising:
a first clad layer;
a second clad layer;
a core held between the first and second clad layers; and
a base layer which is provided under the first clad layer and which is made of a different polymer material from the first clad layer or second clad layer,
wherein the polymeric optical waveguide film includes a groove formed through cutting work, and
wherein a 0.06mm-thick test piece of a polymer material of a layer which comes on the outside of the core when the polymeric optical waveguide film is bent and in which full thickness or partial thickness of portions is removed through the cutting work has a tensile modulus of 0.1 to less than 1.0 GPa at room temperature.

3. The polymeric optical waveguide film according to claim 1, wherein the elongation of the 0.06mm-thick test piece from the yield point to rupture point as measured in a room temperature tensile test is 10% or more.

4. The polymeric optical waveguide film according to claim 2, wherein the elongation of the 0.06mm-thick test piece from the yield point to rupture point as measured in a room temperature tensile test is 10% or more.

5. The polymeric optical waveguide film according to claim 2, wherein the layer which comes on the outside of the core when the polymeric optical waveguide film is bent and in which full thickness or partial thickness of portions is removed through the cutting work is the base layer.

6. The polymeric optical waveguide film according to claim 1, wherein the layer which comes on the outside of the core when the polymeric optical waveguide film is bent and in which full thickness or partial thickness of portions is removed through the cutting work contains a siloxane skeleton-containing polyimide resin.

7. The polymeric optical waveguide film according to claim 2, wherein the layer which comes on the outside of the core when the polymeric optical waveguide film is bent and in which full thickness or partial thickness of portions is removed through the cutting work contains a siloxane skeleton-containing polyimide resin.

8. The polymeric optical waveguide film according to claim 1, wherein the layer which comes on the outside of the core when the polymeric optical waveguide film is bent and in which full thickness or partial thickness of portions is removed through the cutting work contains a polyimide resin having a repeating unit represented by the following general formula (1). 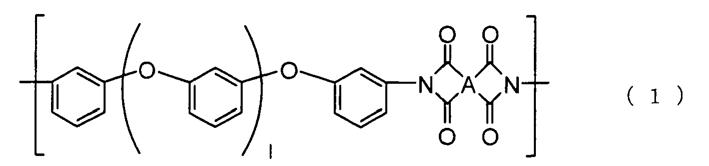 (where 1 denotes an integer of 1 -7; and A denotes a tetravalent organic group)

9. The polymeric optical waveguide film according to claim 2, wherein the layer which comes on the outside of the core when the polymeric optical waveguide film is bent and in which full thickness or partial thickness of portions is removed through the cutting work contains a polyimide resin having a repeating unit represented by the following general formula (1). 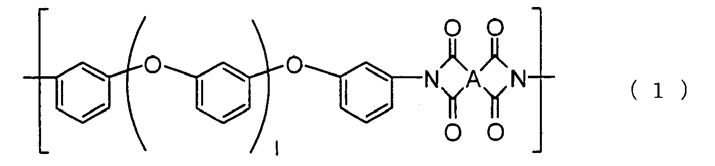 (where 1 denotes an integer of 1-7; and A denotes a tetravalent organic group)

10. The polymeric optical waveguide film according to claim 8, wherein in general formula (1) 1 denotes an integer is 3-5.

11. The polymeric optical waveguide film according to claim 9, wherein in general formula (1) 1 denotes an integer is 3-5.

12. The polymeric optical waveguide film according to claim 1, wherein a cut surface of the layer which comes on the outside of the core when the polymeric optical waveguide film is bent and in which full thickness or partial thickness of portions is removed through the cutting work has a surface roughness Ra of 0.4µm or less.

13. The polymeric optical waveguide film according to claim 2, wherein the layer which comes on the outside of the core when the polymeric optical waveguide film is bent and in which full thickness or partial thickness of portions is removed through the cutting work has a surface roughness Ra of 0.4µm or less.

14. An electrical device comprising a polymeric optical waveguide film according to claim 1 in a bent state.

15. An electrical device comprising a polymeric optical waveguide film according to claim 2 in a bent state.
